# EUROPEAN PATENT SPECIFICATION

(11) **EP 3 904 654 B1**
(45) Date of publication and mention of the grant of the patent: **26.10.2022**
(21) Application number: 21169377.5
(22) Date of filing: 20.04.2021
(51) Int. Cl.: F01P 3/02, F01P 7/16, F01P 5/10, B60K 11/02, B62J 41/00

(54) **STRADDLED VEHICLE**
GRÄTSCHSITZFAHRZEUG
VÉHICULE À ENFOURCHER

(30) Priority: 28.04.2020 JP 2020078979
(43) Date of publication of application: 03.11.2021
(73) Proprietor: Yamaha Hatsudoki Kabushiki Kaisha, Iwata-shi, Shizuoka 438-8501 (JP)
(72) Inventor: TATEISHI, Taisuke, Iwata-shi (JP)
(74) Representative: Grünecker Patent- und Rechtsanwälte PartG mbB

(56) References cited:
- EP-A1- 3 301 273
- EP-A2- 2 806 134
- JP-A- H0 481 516
- US-A1- 2018 030 879

## Description

The present invention relates to a straddled vehicle according to the preamble of the independent claim 1. Such an straddled vehicle can be taken from the prior art document JP H04 81516 A.

Straddled vehicles having water-cooled internal combustion engines have been known in the art. For example, JP 2017-82647 A discloses a motorcycle that includes a water-cooled internal combustion engine (hereinafter referred to as "engine"), a water pump that sends a coolant to the engine, a radiator, and a coolant flow control unit having a thermostat. The motorcycle includes a first passage for sending the coolant from the engine to the radiator and a second passage for returning the coolant from the radiator to the water pump. The coolant flow control unit is formed with a bypass passage that connects together the first passage and the second passage.

When the temperature of the coolant is low, e.g., at start-up of the engine, the thermostat opens the bypass passage. The coolant discharged from the water pump flows through the inside of the engine, the first passage, the bypass passage and the second passage in this order before returning to the water pump. In this case, the coolant does not pass through the radiator and is not cooled therethrough. The coolant of a relatively high temperature flows through the engine. Therefore, the engine is warmed quickly.

When the engine is warmed, the temperature of the coolant increases, and the thermostat closes the bypass passage. The coolant discharged from the water pump flows through the inside of the engine, the first passage, the radiator and the second passage in this order before returning to the water pump. In this case, the coolant is cooled through the radiator. The coolant of a relatively low temperature flows through the engine. Therefore, the engine is cooled sufficiently.

With the motorcycle disclosed in JP 2017-82647 A, the water pump is attached to the side wall of the crankcase of the engine. A muffler joint pipe, which is a portion of the exhaust pipe, is arranged downward of the crankcase.

Now, when a straddled vehicle runs off road, the straddled vehicle preferably has a high minimum ground clearance. With a straddled vehicle whose vehicle body is leaned when turning left and when turning right, the minimum ground clearance is preferably high in order to ensure a sufficient maximum bank angle. Note that the minimum ground clearance refers to the height, from the ground, of the lowest part of the straddled vehicle excluding the wheels.

For example, with the motorcycle disclosed in JP 2017-82647 A, one may consider raising the position of the muffler joint pipe in order to raise the minimum ground clearance. That is, it is possible to raise the minimum ground clearance by arranging the above-mentioned portion of the exhaust pipe, which is located downward of the crankcase, at a relatively high position.

The water pump, which is arranged sideward of the engine due to functional limitations, and the radiator are connected by a hose. If the above-mentioned portion of the exhaust pipe is arranged at a relatively high position, the hose and the above-mentioned portion of the exhaust pipe may possibly interfere with each other. In order to avoid such interference, one may consider arranging the above-mentioned portion of the exhaust pipe sideward of the hose. This however increases the size of the straddled vehicle in the vehicle width direction.

An object of the present invention is to provide a straddled vehicle that includes a water-cooled internal combustion engine having a coolant bypass passage and that can ensure a sufficient minimum ground clearance while reducing the size in the vehicle width direction. According to the present invention said object is solved by a straddled vehicle having the features of independent claim 1. Preferred embodiments are laid down in the dependent claims.

A straddled vehicle disclosed herein includes an internal combustion engine including a crankcase having a side wall, a cylinder body connected to the crankcase, and a cylinder head connected to the cylinder body. The straddled vehicle includes: a water pump attached to the side wall of the crankcase; a radiator arranged forward relative to the cylinder body; a thermostat arranged forward of the cylinder body and rearward relative to the radiator; and an exhaust pipe that is connected to the cylinder head and through which an exhaust gas passes. A coolant passage through which a coolant flows is formed inside the internal combustion engine. The water pump includes an inlet and an outlet connected directly to the coolant passage. The exhaust pipe includes an exhaust pipe portion that is located between a front end and a rear end of the water pump and that has an upper edge located upward relative to a lower end of the water pump as the vehicle is seen from the side. The thermostat is arranged inward relative to the exhaust pipe portion in a vehicle width direction.

With the straddled vehicle described above, the inlet and the outlet of the water pump are connected directly to the coolant passage of the internal combustion engine. There is no member, such as a hose, for connecting together the water pump and the radiator. Therefore, no interference will occur between a member, such as a hose, for connecting together the water pump and the radiator and a portion of the exhaust pipe (i.e., the exhaust pipe portion). Thus, it is possible to reduce the size of the straddled vehicle in the vehicle width direction.

With the straddled vehicle described above, the upper edge of the exhaust pipe portion is located upward relative to the lower end of the water pump. Since the exhaust pipe is arranged at a relatively high position, it is possible to ensure a sufficient minimum ground clearance. Since there is little or no overlap between the exhaust pipe portion and the water pump in the vehicle width direction, it is possible to reduce the size of the straddled vehicle in the vehicle width direction.

With the straddled vehicle described above, the thermostat is arranged forward of the cylinder body. The dead space forward of the cylinder body can be effectively used as a space for installment of the thermostat.

With the straddled vehicle described above, the thermostat is located inward in the vehicle width direction relative to the exhaust pipe portion. The thermostat does not protrude outward in the vehicle width direction relative to the exhaust pipe portion. This also reduces the size of the straddled vehicle in the vehicle width direction.

Thus, with the straddled vehicle described above, it is possible to ensure a sufficient minimum ground clearance while reducing the size in the vehicle width direction.

According to a preferred embodiment, a lower edge of the exhaust pipe portion is located upward relative to an upper end of the water pump.

According to the embodiment described above, it is possible to ensure a sufficient minimum ground clearance of the straddled vehicle.

According to a preferred embodiment, an inner end of the exhaust pipe portion in the vehicle width direction is located inward in the vehicle width direction relative to an outer end of the water pump in the vehicle width direction. An outer end of the exhaust pipe portion in the vehicle width direction is located outward in the vehicle width direction relative to an inner end of the water pump in the vehicle width direction.

According to the embodiment described above, for the vehicle width direction, at least a portion of the exhaust pipe portion is arranged at the same position as the water pump. As compared with a case where the entirety of the exhaust pipe portion is arranged outward in the vehicle width direction relative to the water pump, the exhaust pipe portion less protrudes outward in the vehicle width direction. Therefore, it is possible to further reduce the size of the straddled vehicle in the vehicle width direction.

According to a preferred embodiment, at least a portion of the exhaust pipe portion overlaps with the cylinder body as the vehicle is seen from the side.

According to the embodiment described above, for the up-down direction, at least a portion of the exhaust pipe portion is arranged at the same position as the cylinder body. As compared with a case where the entirety of the exhaust pipe portion is arranged upward relative to the cylinder body, the exhaust pipe portion less protrudes upward.

According to a preferred embodiment, the thermostat is attached to the crankcase.

According to the embodiment described above, since the cylinder body and the cylinder head do not have an attachment portion for the attachment of the thermostat, it is possible to prevent an increase in size of the cylinder body and the cylinder head. It is possible to ensure a relatively large space, on the crankcase, as a space for attachment of the thermostat. Therefore, it is easy to provide a large thermostat. The provision of a large thermostat reduces the water flow resistance.

According to a preferred embodiment, the crankcase has a support surface facing upward. The thermostat is supported on the support surface.

While the straddled vehicle is running, the internal combustion engine is subject to vibrations in the up-down direction. According to the embodiment described above, even when the internal combustion engine vibrates in the up-down direction, the thermostat is stably supported on the crankcase.

According to a preferred embodiment, the support surface includes a first support surface that is formed with a first hole and a second support surface that is formed with a second hole and formed forward of the first support surface. A portion of the thermostat is inserted in the first hole. A bolt for securing the thermostat to the crankcase is inserted through the second hole.

According to the embodiment described above, the thermostat is secured to the crankcase by the bolt extending downward. Thus, even when the internal combustion engine vibrates in the up-down direction, the thermostat is more stably supported on the crankcase. According to the embodiment described above, the second hole, through which the bolt is inserted, is formed forward of the first support surface. As compared with a case where the second hole is formed sideward of the first support surface, it is possible to reduce the size of the thermostat in the vehicle width direction.

According to a preferred embodiment, the thermostat is a bottom-bypass-type thermostat that includes a case formed with a first inlet, a second inlet and an outlet, and a valve arranged in the case, wherein the valve opens the second inlet when temperature is less than a first temperature and closes the second inlet when temperature is greater than or equal to the first temperature.

With the straddled vehicle described above, the thermostat is arranged forward of the cylinder body. Since a relatively large space is ensured as a space for installment of the thermostat, the bottom-bypass-type thermostat can be arranged without difficulty.

According to a preferred embodiment, the first inlet is open upward, the second inlet is open sideward, and the outlet is open downward.

According to the embodiment described above, it is possible to avoid interference between the coolant passageway connected to the first inlet of the thermostat, the coolant passageway connected to the second inlet, and the coolant passageway connected to the outlet.

According to a preferred embodiment, the valve of the thermostat is configured to be movable leftward and rightward.

As described above, with the straddled vehicle described above, it is possible to ensure a relatively large space as a space for installment of the thermostat, and the bottom-bypass-type thermostat whose valve moves leftward and rightward can be arranged without difficulty.

According to a preferred embodiment, the coolant passage of the internal combustion engine includes a first coolant passage having a first inlet port and a first outlet port, and a second coolant passage having a second inlet port and a second outlet port. The inlet of the water pump is connected to the second outlet port of the second coolant passage, and the outlet of the water pump is connected to the first inlet port of the first coolant passage. The radiator has an inlet and an outlet. The straddled vehicle includes: a first passageway connected to the first outlet port of the first coolant passage and the inlet of the radiator; a second passageway connected to the outlet of the radiator and the first inlet of the thermostat; and a bypass passageway connected to the first outlet port of the first coolant passage and the second inlet of the thermostat. The outlet of the thermostat is connected to the second inlet port of the second coolant passage.

According to the embodiment described above, when the temperature of the coolant in the thermostat is less than the first temperature, the coolant flows through the water pump, the first coolant passage, the bypass passageway, the thermostat and the second coolant passage in this order. Since the coolant is not cooled in the radiator, the temperature of the coolant flowing through the first coolant passage and the second coolant passage is relatively high. Therefore, the internal combustion engine is warmed quickly. On the other hand, when the temperature of the internal combustion engine becomes high, the temperature of the coolant in the thermostat becomes greater than or equal to the first temperature. Then, the coolant flows through the water pump, the first coolant passage, the first passageway, the radiator, the second passageway, the thermostat and the second coolant passage in this order. Since the coolant is cooled in the radiator, the temperature of the coolant flowing through the first coolant passage and the second coolant passage is relatively low. Therefore, the internal combustion engine is cooled.

According to a preferred embodiment, the water pump, the exhaust pipe portion, the thermostat and the second passageway are arranged rightward relative to a vehicle center line, and at least a portion of the first passageway and at least a portion of the bypass passageway are arranged leftward relative to the vehicle center line. According to a preferred embodiment, the water pump, the exhaust pipe portion, the thermostat and the second passageway are arranged leftward relative to the vehicle center line, and at least a portion of the first passageway and at least a portion of the bypass passageway are arranged rightward relative to the vehicle center line.

The first passageway, the second passageway and the bypass passageway are coolant passageways arranged outside the internal combustion engine (hereinafter referred to as external coolant passageways). According to the embodiment described above, since a portion of the external coolant passageways is arranged rightward of the vehicle center line and another portion thereof is arranged leftward of the vehicle center line. Since the external coolant passageways are arranged separately on the left and right side of the vehicle center line, they are unlikely to interfere with each other. The external coolant passageways are arranged in a compact arrangement. Therefore, it is possible to reduce the size of the straddled vehicle in the vehicle width direction.

According to a preferred embodiment, the internal combustion engine includes a cylinder head cover connected to the cylinder head. The exhaust pipe portion includes a portion that overlaps with the cylinder body as the vehicle is seen from the side. The first passageway includes a portion that overlaps with the cylinder head cover as the vehicle is seen from the side. The bypass passageway includes a portion that overlaps with the cylinder body as the vehicle is seen from the side.

According to the embodiment described above, the exhaust pipe portion, the first passageway and the bypass passageway are arranged in a compact arrangement while avoiding interference therebetween.

### Advantageous Effects Of Invention

According to the present invention, it is possible to provide a straddled vehicle that includes a water-cooled internal combustion engine having a coolant bypass passage and that ensures a sufficient minimum ground clearance while reducing the size in the vehicle width direction.

### BRIEF DESCRIPTION OF THE DRAWINGS

FIG. 1 is a right side view of a motorcycle according to an embodiment.
FIG. 2 is a right side view of an internal combustion engine, etc.
FIG. 3 is a left side view of the internal combustion engine, etc.
FIG. 4 is a front view of the internal combustion engine, etc.
FIG. 5 is a view similar to FIG. 4, wherein a radiator and an exhaust pipe are omitted.
FIG. 6 is a configuration diagram of a coolant circuit.
FIG. 7 is a view showing a shape of a water pump as the vehicle is seen from the side.
FIG. 8 is a front view showing, on an enlarged scale, a portion of the internal combustion engine with a thermostat not attached thereto.
FIG. 9 is a front view showing, on an enlarged scale, a portion of the internal combustion engine with the thermostat attached thereto.
FIG. 10 is a cross-sectional view of the thermostat where the first inlet is open and the second inlet is closed.
FIG. 11 is a cross-sectional view of the thermostat where the first inlet is closed and the second inlet is open.

### DETAILED DESCRIPTION OF THE PREFERRED EMBODIMENTS

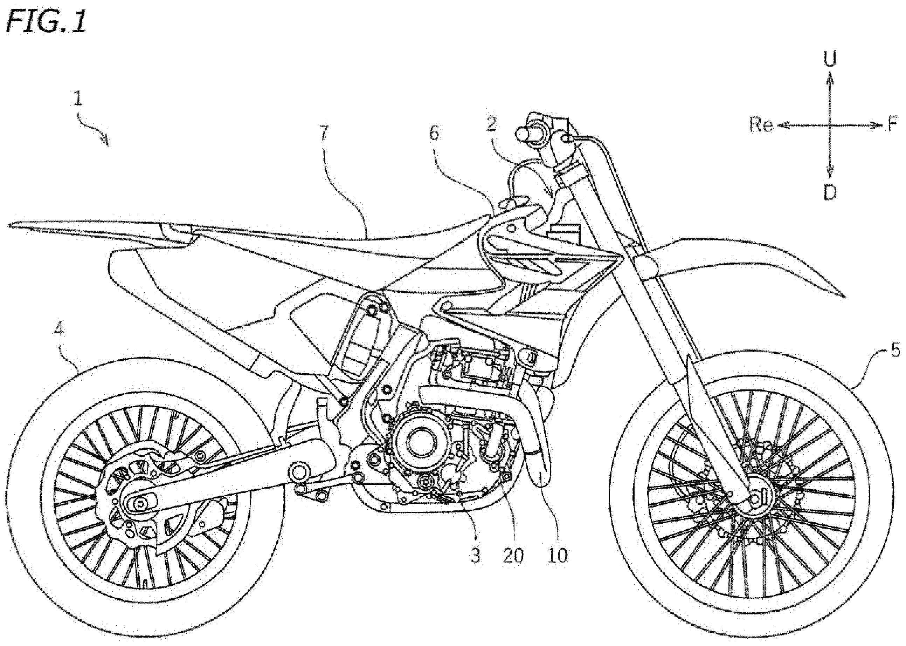

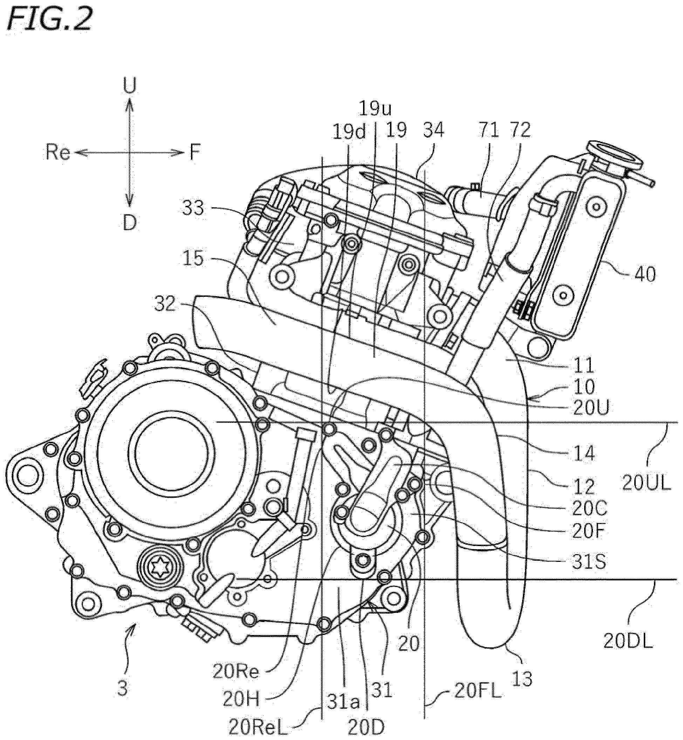

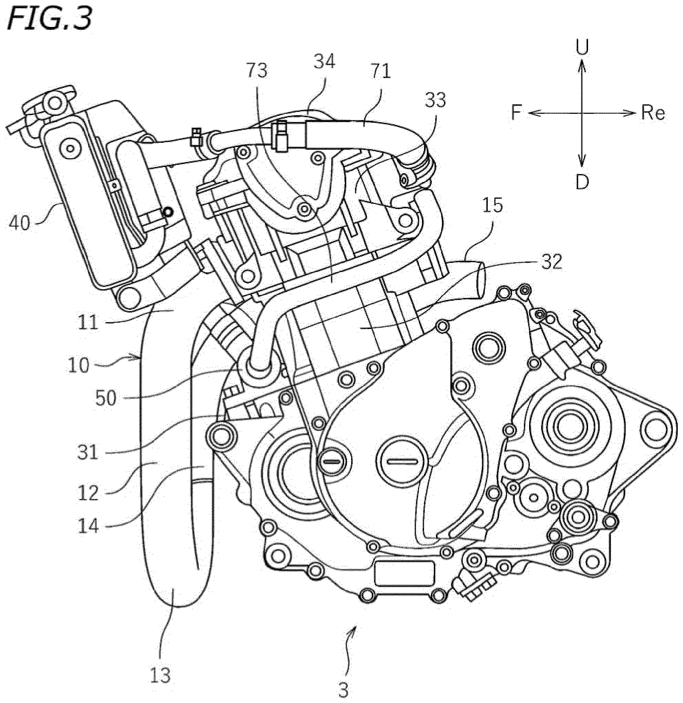

One embodiment will now be described with reference to the drawings. FIG. 1 is a right side view of a motorcycle 1, which is an example of a straddled vehicle. The motorcycle 1 includes a vehicle body frame 2, an internal combustion engine (hereinafter referred to as an engine) 3 supported on the vehicle body frame 2, a rear wheel 4 driven by the engine 3, a front wheel 5, a fuel tank 6, and a seat 7 on which the passenger sits. The motorcycle 1 includes an intake pipe (not shown) connected to the engine 3, an exhaust pipe 10 connected to the engine 3, a water pump 20, a radiator 40 (see FIG. 2), and a thermostat 50 (see FIG. 3).

The terms front, rear, left, right, up and down, as used in the description below, refer to these directions as seen from a virtual passenger seated on the seat 7 while the motorcycle 1 is standing upright on a horizontal surface with no passenger and no load thereon, unless specified otherwise. The designations F, Re, L, R, U and D, as used in the figures, refer to front, rear, left, right, up and down, respectively. The term "front/forward" refers not only to the direction that extends in the front direction along the vehicle center line, as the vehicle is seen from above, but also to directions that are inclined left/right from that direction by an angle that is less than or equal to 45 degrees. Similarly, the term "rear/rearward" refers not only to the direction that extends rearward along the vehicle center line, as the vehicle is seen from above, but also to directions that are inclined left/right from that direction by an angle of 45 degrees of less. The term "left/leftward" refers not only to the direction that extends leftward vertical to the vehicle center line, as the vehicle is seen from above, but also to directions that are inclined frontward/rearward from that direction by an angle of 45 degrees of less. The term "right/rightward" refers not only to the direction that extends rightward vertical to the vehicle center line, as the vehicle is seen from above, but also to directions that are inclined frontward/rearward from that direction by an angle of 45 degrees of less. The term "up/upward" refers not only to the vertically upward direction, as the vehicle is seen from the side, but also to directions that are inclined frontward/rearward from that direction by an angle of 45 degrees of less. The term "down/downward" refers not only to the vertically downward direction, as the vehicle is seen from the side, but also to directions that are inclined frontward/rearward from that direction by an angle of 45 degrees of less.

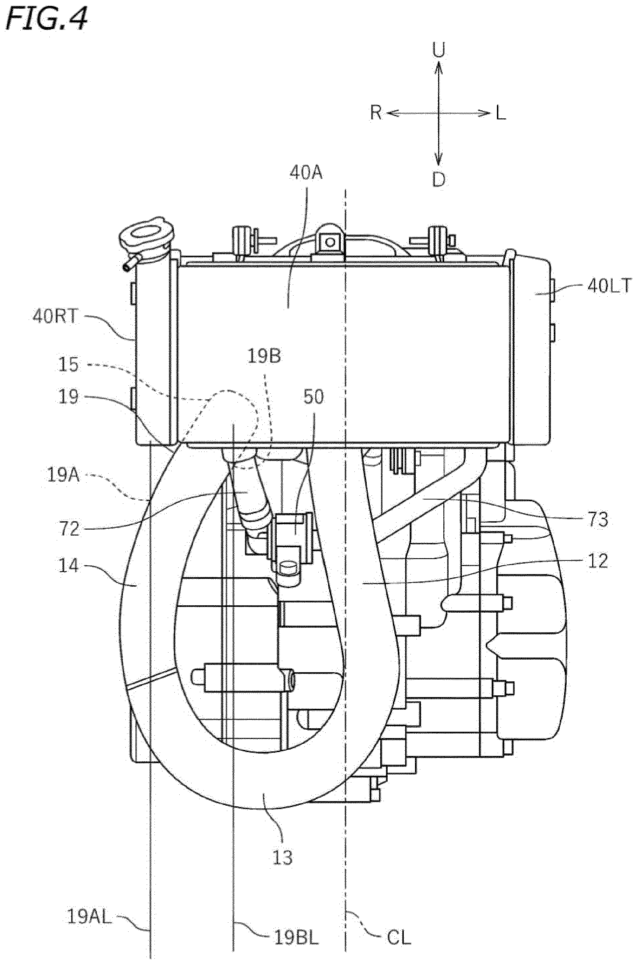

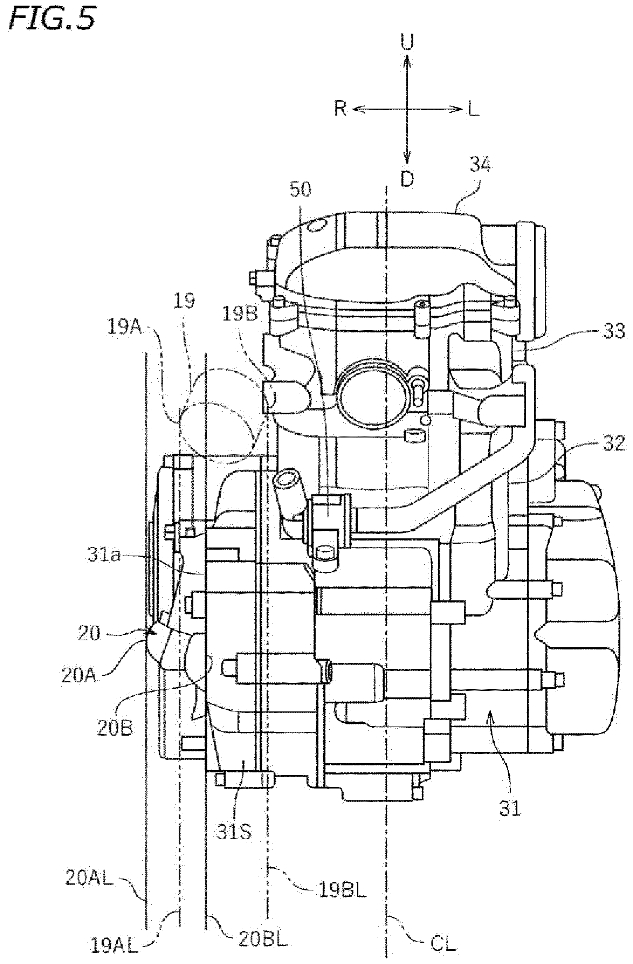

FIG. 2 is a right side view of the engine 3. FIG. 3 is a left side view of the engine 3. FIG. 4 and FIG. 5 are front views of the engine 3, wherein the radiator and the exhaust pipe 10 are omitted in FIG. 5. The engine 3 includes a crankcase 31, a cylinder body 32 connected to the crankcase 31, a cylinder head 33 connected to the cylinder body 32, and a cylinder head cover 34 connected to the cylinder head 33. A crankshaft (not shown) is arranged inside the crankcase 31. The crankcase 31 rotatably supports the crankshaft. The cylinder body 32 extends upward from the crankcase 31. Strictly speaking, the cylinder body 32 extends upward and forward from the crankcase 31. A cylinder (not shown) is arranged inside the cylinder body 32. A piston (not shown) is arranged inside the cylinder. The intake pipe and the exhaust pipe 10 are connected to the cylinder head 33.

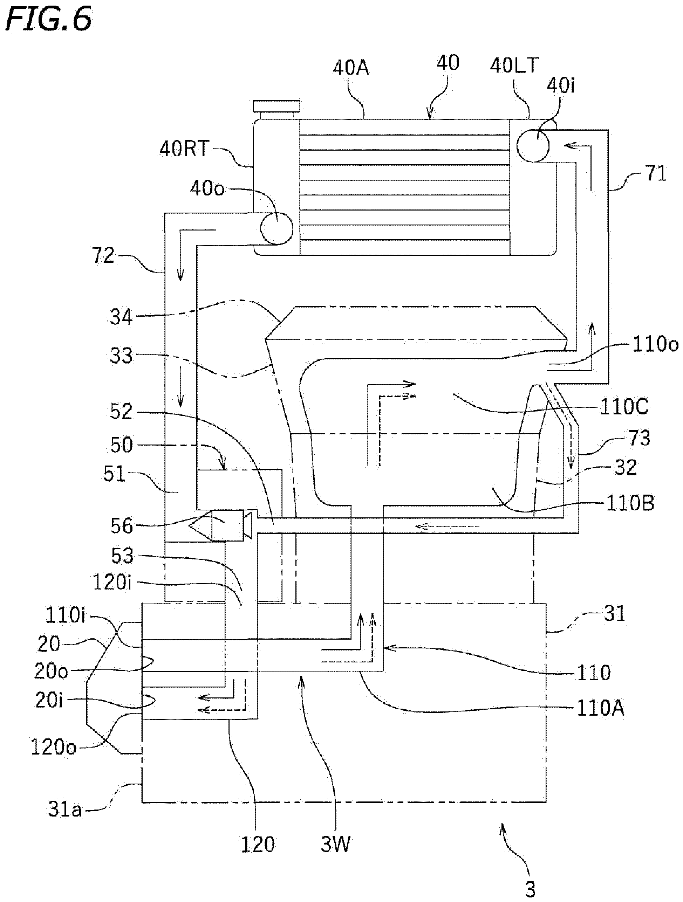

The engine 3 is a water-cooled internal combustion engine. FIG. 6 is a configuration diagram of a coolant circuit. As shown in FIG. 6, a coolant passage 3W through which the coolant flows is formed inside the engine 3. The coolant passage 3W includes a first coolant passage 110 having a first inlet port 110i and a first outlet port 110o, and a second coolant passage 120 having a second inlet port 120i and a second outlet port 120o. Herein, the first coolant passage 110 includes a passage 110A formed inside the crankcase 31, a passage 110B formed inside the cylinder body 32, and a passage 110C formed inside the cylinder head 33. The second coolant passage 120 is formed inside the crankcase 31.

The water pump 20 is attached to the side wall of the crankcase 31. Herein, the water pump 20 is attached to a right wall 31a of the crankcase 31. As shown in FIG. 6, the water pump 20 has an inlet 20i for taking in the coolant, and an outlet 20o for discharging the coolant. The inlet 20i and the outlet 20o are connected directly to the coolant passage 3W of the engine 3. Herein, the inlet 20i of the water pump 20 is connected directly to the second outlet port 120o of the second coolant passage 120. The outlet 20o of the water pump 20 is connected directly to the first inlet port 110i of the first coolant passage 110.

As shown in FIG. 2, the radiator 40 is arranged forward relative to the engine 3. Specifically, the radiator 40 is arranged forward relative to the crankcase 31. The radiator 40 is arranged forward relative to the cylinder body 32. The radiator 40 is arranged forward relative to the cylinder head 33. The radiator 40 is arranged forward relative to the cylinder head cover 34. As shown in FIG. 4, the radiator 40 includes a core portion 40A, a left tank 40LT provided in a left-side portion of the core portion 40A, and a right tank 40RT provided in a right-side portion of the core portion 40A. The left tank 40LT is formed with an inlet port 40i for the coolant (see FIG. 6). The right tank 40RT is formed with an outlet port 40o for the coolant. The coolant flows inside the core portion 40A, and the air flows outside the core portion 40A. The core portion 40A is configured to exchange heat between the coolant and the air.

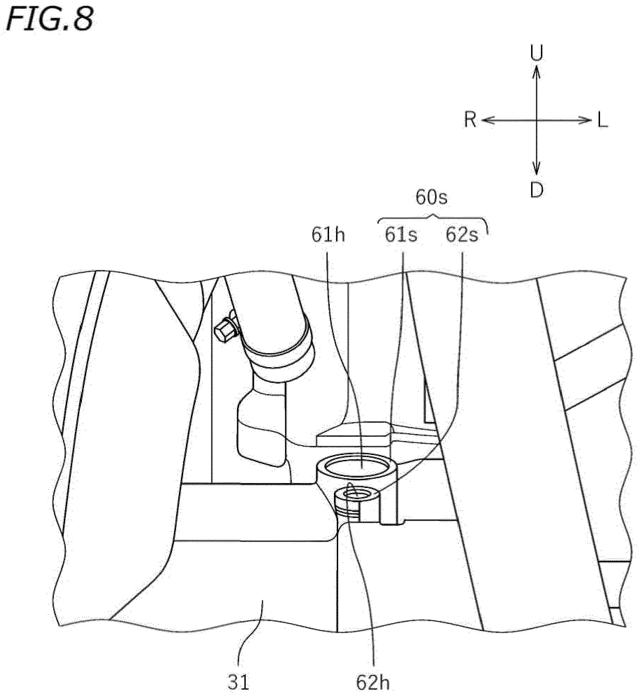

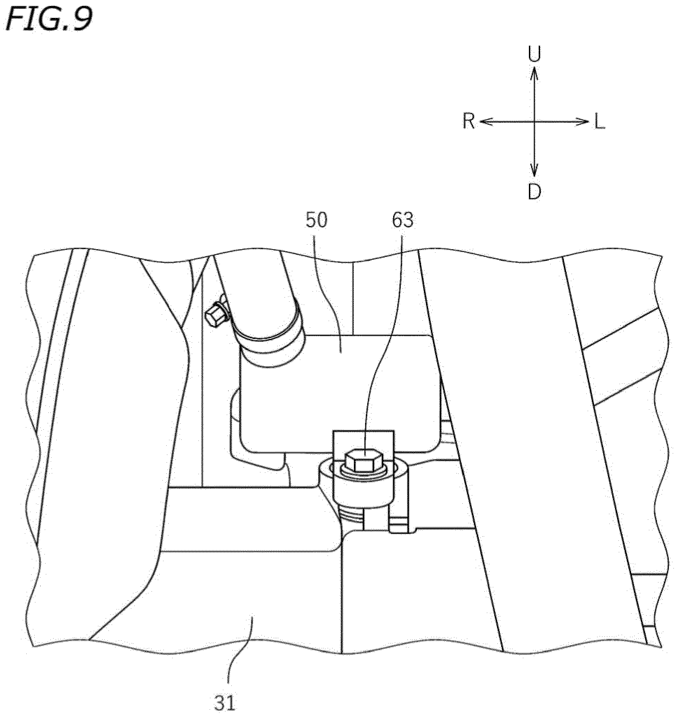

As shown in FIG. 3, the thermostat 50 is arranged forward of the cylinder body 32 and rearward relative to the radiator 40. The thermostat 50 is attached to the crankcase 31. FIG. 8 represents a state where the thermostat 50 is removed from the crankcase 31. As shown in FIG. 8, the crankcase 31 has a support surface 60s facing upward that supports the thermostat 50. Note that the term "upward" as used herein is not limited to the upward direction along the vertical direction, and includes any direction that is inclined by an angle less than or equal to 45 degrees from the vertical direction. The support surface 60s includes a first support surface 61s that is formed with a first hole 61h, and a second support surface 62s that is formed with a second hole 62h. The first hole 61h and the second hole 62h are open upward. The second hole 62h is formed forward of the first hole 61h. The second support surface 62s is arranged forward of the first support surface 61s. FIG. 9 represents the thermostat 50 attached to the crankcase 31. A portion of the thermostat 50 is inserted in the first hole 61h. A bolt 63 for securing the thermostat 50 to the crankcase 31 is inserted through the second hole 62h.

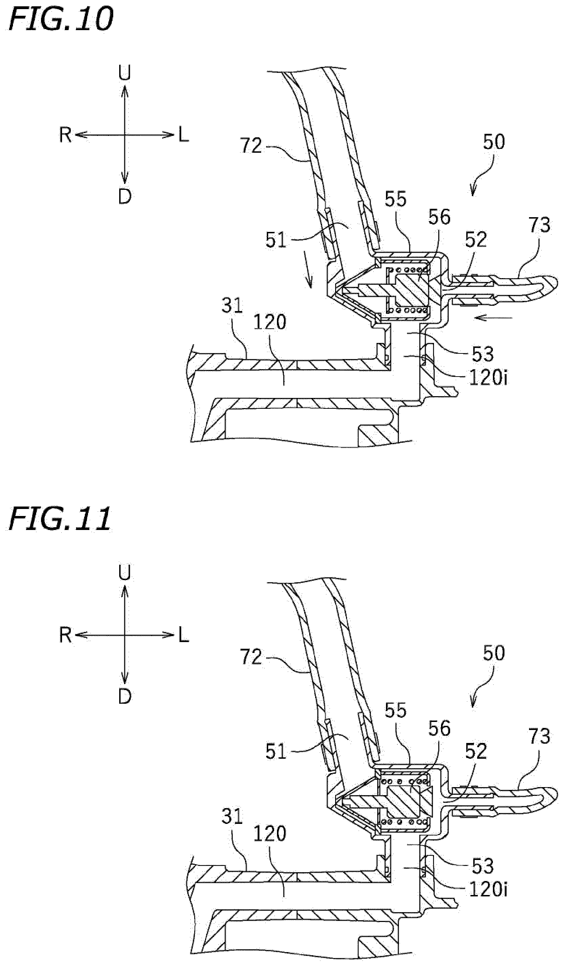

The thermostat 50 is a so-called bottom-bypass-type thermostat. As shown in FIG. 10, the thermostat 50 includes a case 55 and a valve 56 that is arranged inside the case 55. The case 55 is formed with a first inlet 51, a second inlet 52 and an outlet 53. The case 55 is formed in a tubular shape extending left and right. Although there is no particular limitation on the material of the case 55, the case 55 is made of a resin in the present embodiment. The valve 56 is movable leftward and rightward. In other words, the valve 56 is movable in the axial direction of the case 55. The left wall of the case 55 corresponds to the bottom wall. The first inlet 51 is formed on a right portion of the case 55. The first inlet 51 is open upward. The second inlet 52 is formed on the left wall of the case 55. The second inlet 52 is open sideward, and is herein open leftward. The outlet 53 is formed on a lower portion of the case 55. The outlet 53 is open downward. The thermostat 50 is configured to open the second inlet 52 when the temperature is less than the first temperature (see FIG. 11) and close the second inlet 52 when the temperature is greater than or equal to the first temperature (see FIG. 10). The thermostat 50 is configured to close the first inlet 51 when the temperature is less than or equal to the second temperature, which is lower than the first temperature (see FIG. 11).

As shown in FIG. 6, the first outlet port 110o of the first coolant passage 110 of the engine 3 and the inlet 40i of the radiator 40 are connected together by a first passageway 71. The outlet 40o of the radiator 40 and the first inlet 51 of the thermostat 50 are connected together by a second passageway 72. The first outlet port 110o of the first coolant passage 110 of the engine 3 and the second inlet 52 of the thermostat 50 are connected together by a bypass passageway 73. The outlet 53 of the thermostat 50 and the second inlet port 120i of the second coolant passage 120 of the engine 3 are directly connected together. There is no particular limitation on the material of the first passageway 71, the second passageway 72 and the bypass passageway 73.

As shown in FIG. 2, the exhaust pipe 10 includes a first portion 11 extending forward from the cylinder head 33, a second portion 12 extending downward from the first portion 11, a third portion 13 (see FIG. 4) extending rightward from the second portion 12, a fourth portion 14 extending upward from the third portion 13, and a fifth portion 15 extending rearward from the fourth portion 14.

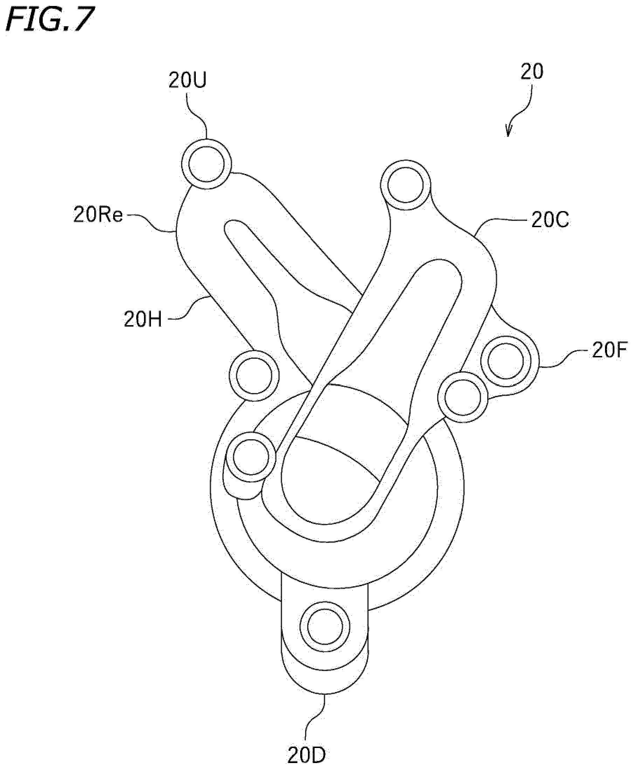

The crankcase 31 has a crankcase cover 31S including the right wall 31a (see FIG. 2 and FIG. 5). FIG. 7 represents the shape of the water pump 20 as the vehicle is seen from the side. In the present embodiment, the water pump 20 includes a pump housing 20H attached to the crankcase cover 31S, and the pump cover 20C attached to the pump housing 20H. Although not shown in the figure, the water pump 20 includes an impeller that is rotatably supported on the crankcase cover 31S. The impeller is accommodated inside the pump housing 20H and arranged leftward of the pump cover 20C. The crankcase cover 31S, the pump housing 20H and the pump cover 20C together define the water passage of the water pump 20. In the present embodiment, the water pump 20 refers to a collection of parts for carrying the coolant, i.e., those parts that are attached to the crankcase cover 31S, such as the impeller, the pump housing 20H and the pump cover 20C, not including the crankcase cover 31S itself. Reference signs 20U, 20D, 20F and 20Re denote the upper end, the lower end, the front end and the rear end, respectively, of the water pump 20.

In FIG. 2, the straight line 20FL represents a vertical line that passes through the front end 20F of the water pump 20. The straight line 20ReL represents a vertical line that passes through the rear end 20Re of the water pump 20. The straight line 20UL represents a horizontal line that passes through the upper end 20U of the water pump 20. The straight line 20DL represents a horizontal line that passes through the lower end 20D of the water pump 20. As shown in FIG. 2, as the vehicle is seen from the side, the fifth portion 15 of the exhaust pipe 10 includes an exhaust pipe portion 19 that is located between the front end 20F and the rear end 20Re of the water pump 20 and has an upper edge 19u located upward relative to the lower end 20D of the water pump 20. A lower edge 19d of the exhaust pipe portion 19 is located upward relative to the upper end 20U of the water pump 20. As the vehicle is seen from the side, the exhaust pipe portion 19 overlaps with the cylinder body 32.

In FIG. 4 and FIG. 5, the straight line 19AL represents a vertical line that passes through the outer end 19A of the exhaust pipe portion 19 in the vehicle width direction. The straight line 19BL represents a vertical line that passes through the inner end 19B of the exhaust pipe portion 19 in the vehicle width direction. Note that the outward direction in the vehicle width direction refers to the direction away from the vehicle center line CL, and the inward direction in the vehicle width direction refers to the direction toward the vehicle center line CL. As shown in FIG. 4, as the vehicle is seen from the front side, the thermostat 50 is arranged inward of the exhaust pipe portion 19 in the vehicle width direction.

In FIG. 5, the straight line 20AL represents a vertical line that passes through the outer end 20A of the water pump 20 in the vehicle width direction. The straight line 20BL represents a vertical line that passes through the inner end 20B of the water pump 20 in the vehicle width direction. As shown in FIG. 5, the inner end 19B of the exhaust pipe portion 19 in the vehicle width direction is located inward in the vehicle width direction relative to the outer end 20A of the water pump 20 in the vehicle width direction. The outer end 19A of the exhaust pipe portion 19 in the vehicle width direction is located outward in the vehicle width direction relative to the inner end 20B of the water pump 20 in the vehicle width direction.

As shown in FIG. 5, the water pump 20, the exhaust pipe portion 19 and the thermostat 50 are arranged rightward relative to the vehicle center line CL. As shown in FIG. 4, the second passageway 72 is arranged rightward relative to the vehicle center line CL. At least a portion of the first passageway 71 and at least a portion of the bypass passageway 73 are arranged leftward relative to the vehicle center line CL.

As shown in FIG. 2, the exhaust pipe portion 19 includes a portion that overlaps with the cylinder body 32 as the vehicle is seen from the side. The second passageway 72 does not overlap with the cylinder body 32, the cylinder head 33 and the cylinder head cover 34 as the vehicle is seen from the side. As shown in FIG. 3, the first passageway 71 includes a portion that overlaps with the cylinder head cover 34 as the vehicle is seen from the side. The bypass passageway 73 includes a portion that overlaps with the cylinder body 32 as the vehicle is seen from the side.

The motorcycle 1 is configured as described above. Next, the circulation of the coolant will be described.

Immediately after start-up of the engine 3 of the motorcycle 1, the temperature of the engine 3 is relatively low. Therefore, the temperature of the thermostat 50 is relatively low. When the temperature of the thermostat 50 is less than the first temperature, the valve 56 opens the second inlet 52 as shown in FIG. 11. As a result, as indicated by a broken-line arrow in FIG. 6, the coolant flows through the water pump 20, the first coolant passage 110, the bypass passageway 73, the thermostat 50 and the second coolant passage 120 in this order. Since the coolant is not cooled in the radiator 40, the temperature of the coolant flowing through the first coolant passage 110 and the second coolant passage 120 is relatively high. Therefore, the engine 3 is warmed quickly.

When the temperature of the engine 3 becomes high, the temperature of the thermostat 50 becomes greater than or equal to the first temperature. Then, as shown in FIG. 10, the valve 56 closes the second inlet 52. As a result, as indicated by a solid-line arrow in FIG. 6, the coolant flows through the water pump 20, the first coolant passage 110, the first passageway 71, the radiator 40, the second passageway 72, the thermostat 50 and the second coolant passage 120 in this order. Since the coolant is cooled in the radiator 40, the temperature of the coolant flowing through the first coolant passage 110 and the second coolant passage 120 is relatively low. Therefore, the engine 3 is cooled sufficiently.

As described above, with the motorcycle 1 according to the present embodiment, as shown in FIG. 6, the inlet 20i and the outlet 20o of the water pump 20 are connected directly to the coolant passage 3W of the engine 3. There is no member such as a hose that connects together the water pump 20 and the radiator 40 (see FIG. 2). Therefore, there is no possibility that a member such as a hose that connects together the water pump 20 and the radiator 40 interferes with a portion (i.e., the exhaust pipe portion) 19 of the exhaust pipe 10. This reduces the size of the motorcycle 1 in the vehicle width direction.

With the motorcycle 1, as shown in FIG. 2, the upper edge 19u of the exhaust pipe portion 19 is located upward relative to the lower end 20D of the water pump 20. Since the exhaust pipe 10 is arranged at a relatively high position, it is possible to ensure a sufficient minimum ground clearance. Since there is no overlap between the exhaust pipe portion 19 and the water pump 20 in the vehicle width direction, it is possible to reduce the size of the motorcycle 1 in the vehicle width direction.

With the motorcycle 1, as shown in FIG. 3, the thermostat 50 is arranged forward of the cylinder body 32. The dead space forward of the cylinder body 32 can be effectively used as a space for installment of the thermostat 50.

With the motorcycle 1, as shown in FIG. 4, the thermostat 50 is located inward in the vehicle width direction relative to the exhaust pipe portion 19. The thermostat 50 does not protrude outward in the vehicle width direction relative to the exhaust pipe portion 19. This also reduces the size of the motorcycle 1 in the vehicle width direction.

With the motorcycle 1 according to the present embodiment, the advantageous effects described above are organically combined together, making it possible to ensure a sufficient minimum ground clearance while reducing the size in the vehicle width direction.

With the motorcycle 1 according to the present embodiment, as shown in FIG. 2, the lower edge 19d of the exhaust pipe portion 19 is located upward relative to the upper end 20U of the water pump 20. Thus, it is possible to ensure a sufficient minimum ground clearance.

With the motorcycle 1 according to the present embodiment, as shown in FIG. 5, the inner end 19B of the exhaust pipe portion 19 in the vehicle width direction is located inward in the vehicle width direction relative to the outer end 20A of the water pump 20 in the vehicle width direction, and the outer end 19A of the exhaust pipe portion 19 in the vehicle width direction is located outward in the vehicle width direction relative to the inner end 20B of the water pump 20 in the vehicle width direction. For the vehicle width direction, at least a portion of the exhaust pipe portion 19 is arranged at the same position as the water pump 20. According to the present embodiment, as compared with a case where the entirety of the exhaust pipe portion 19 is arranged outward in the vehicle width direction relative to the water pump 20, the exhaust pipe portion 19 less protrudes outward in the vehicle width direction. Therefore, it is possible to further reduce the size of the motorcycle 1 in the vehicle width direction.

With the motorcycle 1 according to the present embodiment, as shown in FIG. 2, the exhaust pipe portion 19 overlaps with the cylinder body 32 as the vehicle is seen from the side. For the up-down direction, at least a portion of the exhaust pipe portion 19 is arranged at the same position as the cylinder body 32. According to the present embodiment, as compared with a case where the entirety of the exhaust pipe portion 19 is arranged upward relative to the cylinder body 32, the exhaust pipe portion 19 less protrudes upward.

With the motorcycle 1 according to the present embodiment, as shown in FIG. 3 and FIG. 5, the thermostat 50 is attached to the crankcase 31. Since the cylinder body 32 and the cylinder head 33 do not have an attachment portion for the attachment of the thermostat 50, it is possible to prevent an increase in size of the cylinder body 32 and the cylinder head 33. It is possible to ensure a relatively large space, on the crankcase 31, as a space for attachment of the thermostat 50. According to the present embodiment, since the thermostat 50 is attached to the crankcase 31, it is easy to provide a large thermostat 50. The provision of a large thermostat 50 increases the flow rate of the coolant.

While the motorcycle 1 is running, the engine 3 is subject to vibrations in the up-down direction. With the motorcycle 1 of the present embodiment, the thermostat 50 is supported on the support surface 60s (see FIG. 8) facing upward of the crankcase 31. Therefore, even when the engine 3 vibrates in the up-down direction, the thermostat 50 is stably supported on the crankcase 31.

In the present embodiment, as shown in FIG. 8, the support surface 60s includes the first support surface 61s, which has the first hole 61h in which a portion of the thermostat 50 is inserted, and the second support surface 62s, which has the second hole 62h through which the bolt 63 (see FIG. 9) for securing the thermostat 50 to the crankcase 31 is inserted. According to the present embodiment, the thermostat 50 is secured to the crankcase 31 by the bolt 63 extending downward. Thus, even when the engine 3 vibrates in the up-down direction, the thermostat 50 is more stably supported on the crankcase 31. The second hole 62h, through which the bolt 63 is inserted, is formed forward of the first support surface 61s. As compared with a case where the second hole 62h is formed leftward or rightward of the first support surface 61s, it is possible to reduce the size of the thermostat 50 in the vehicle width direction.

With the motorcycle 1 of the present embodiment, the thermostat 50 is arranged forward of the cylinder body 32 (see FIG. 3). A relatively large space is ensured as a space for installment of the thermostat 50. Thus, the bottom-bypass-type thermostat 50 can be arranged without difficulty.

With the motorcycle 1 of the present embodiment, as shown in FIG. 10, the first inlet 51 of the case 55 of the thermostat 50 is open upward, the second inlet 52 is open sideward, and the outlet 53 is open downward. Therefore, it is possible to easily avoid interference between the second passageway 72 connected to the first inlet 51, the bypass passageway 73 connected to the second inlet 52, and the coolant passageway (the second coolant passage 120) connected to the outlet.

In the present embodiment, the thermostat 50 is installed in the horizontal direction. That is, the thermostat 50 is installed so that the axis of the case 55 extends in the vehicle width direction, and the valve 56 of the thermostat 50 is movable leftward and rightward (see FIG. 10 and FIG. 11). As described above, according to the present embodiment, it is possible to ensure a relatively large space as a space for installment of the thermostat 50, and the bottom-bypass-type thermostat 50 whose valve 56 moves leftward and rightward can be arranged without difficulty.

As shown in FIG. 4 and FIG. 5, according to the present embodiment, the water pump 20, the exhaust pipe portion 19, the thermostat 50 and the second passageway 72 are arranged rightward relative to the vehicle center line CL. At least a portion of the first passageway 71 and at least a portion of the bypass passageway 73 are arranged leftward relative to the vehicle center line CL. The first passageway 71, the second passageway 72 and the bypass passageway 73 are coolant passageways arranged outside the engine 3 (hereinafter referred to as external coolant passageways). According to the present embodiment, since the external coolant passageways are arranged separately on the left and right side of the vehicle center line CL, they are unlikely to interfere with each other. The external coolant passageways are arranged in a compact arrangement. Therefore, it is possible to reduce the size of the motorcycle 1 in the vehicle width direction.

According to the present embodiment, as shown in FIG. 2, the exhaust pipe portion 19 includes a portion that overlaps with the cylinder body 32 as the vehicle is seen from the side. As shown in FIG. 3, the first passageway 71 includes a portion that overlaps with the cylinder head cover 34 as the vehicle is seen from the side. The bypass passageway 73 includes a portion that overlaps with the cylinder body 32 as the vehicle is seen from the side. According to the present embodiment, the exhaust pipe portion 19, the first passageway 71 and the bypass passageway 73 are arranged in a compact arrangement while avoiding interference therebetween.

While one embodiment has been described above, the above embodiment is merely an example. Various other embodiments are possible. Next, other embodiment examples will be described briefly.

The lower edge 19d of the exhaust pipe portion 19 may be located downward relative to the upper end 20U of the water pump 20. As the vehicle is seen from the side, at least a portion of the exhaust pipe portion 19 and the water pump 20 may overlap with each other.

For the vehicle width direction, the exhaust pipe portion 19 and the water pump 20 may be arranged at different positions. For example, the exhaust pipe portion 19 may be arranged leftward relative to the water pump 20.

As the vehicle is seen from the side, the exhaust pipe portion 19 does not need to overlap with the cylinder body 32.

The support surface 60s that supports the thermostat 50 does not always need to be facing upward. For example, the support surface 60s may be facing forward or sideward. The second support surface 62s does not always need to be formed forward of the first support surface 61s. For example, the second support surface 62s may be formed sideward of the first support surface 61s. The thermostat 50 may be attached to a part other than the crankcase 31 of the engine 3. For example, the thermostat 50 may be attached to the cylinder body 32.

The orientations of the first inlet 51, the second inlet 52 and the outlet 53 of the thermostat 50 may be different from those of the embodiment described above. The direction of movement of the valve 56 of the thermostat 50 is not limited to leftward and rightward. For example, the thermostat 50 may be arranged so that the valve 56 moves upward and downward. A thermostat of a type other than a bottom-bypass type may be used as the thermostat 50.

The water pump 20, the exhaust pipe 10, the thermostat 50, the first passageway 71, the second passageway 72, the bypass passageway 73 and the radiator 40 may be arranged in positions that are left-right-inverted from those of the embodiment described above. The water pump 20, the exhaust pipe portion 19, the thermostat 50 and the second passageway 72 may be arranged leftward relative to the vehicle center line CL, and at least a portion of the first passageway 71 and at least a portion of the bypass passageway 73 may be arranged rightward relative to the vehicle center line CL.

The exhaust pipe portion 19 does not always need to include a portion that overlaps with the cylinder body 32 as the vehicle is seen from the side. The first passageway 71 does not always need to include a portion that overlaps with the cylinder head cover 34 as the vehicle is seen from the side. The bypass passageway 73 does not always need to include a portion that overlaps with the cylinder body 32 as the vehicle is seen from the side.

A straddled vehicle refers to a vehicle that is straddled by a passenger. The straddled vehicle is not limited to the motorcycle 1. The straddled vehicle may be an auto tricycle, an ATV (All Terrain Vehicle), or a snowmobile, for example.

### Reference Signs List

1: Motorcycle (straddled vehicle), 3: Internal combustion engine, 3W: Coolant passage, 10: Exhaust pipe, 19: Exhaust pipe portion, 19u: Upper edge of exhaust pipe portion, 19d: Lower edge of exhaust pipe portion, 19A: Outer end of exhaust pipe portion in vehicle width direction, 19B: Inner end of exhaust pipe portion in vehicle width direction, 20: Water pump, 20i: Inlet of water pump, 20o: Outlet of water pump, 20A: Outer end of water pump in vehicle width direction, 20B: Inner end of water pump in vehicle width direction, 20F: Front end of water pump, 20Re: Rear end of water pump, 20D: Lower end of water pump, 20U: Upper end of water pump, 31: Crankcase, 31a: Side wall of crankcase, 32: Cylinder body, 33: Cylinder head, 34: Cylinder head cover, 40: Radiator, 40i: Inlet of radiator, 40o: Outlet of radiator, 50: Thermostat, 51: First inlet, 52: Second inlet, 53: Outlet, 55: Case, 56: Valve, 60s: Support surface, 61h: First hole, 61s: First support surface, 62h: Second hole, 62s: Second support surface, 63: Bolt, 71: First passageway, 72: Second passageway, 73: Bypass passage, 110: First coolant passage, 110i: First inlet port, 110o: First outlet port, 120: Second coolant passage, 120i: Second inlet port, 120o: Second outlet port, CL: Vehicle center line

## Claims

1. A straddled vehicle (1) comprising:
a water-cooled internal combustion engine (3) including a crankcase (31) having a side wall (31a), a cylinder body (32) connected to the crankcase (31), and a cylinder head (33) connected to the cylinder body (32);
a water pump (20);
a radiator (40) arranged forward relative to the cylinder body (32) with regard to a front-rear direction of the vehicle;
a thermostat (50) arranged forward of the cylinder body (32) and rearward relative to the radiator (40) with regard to the front-rear direction of the vehicle; and
an exhaust pipe (10) that is connected to the cylinder head (33) and through which an exhaust gas passes, wherein:
a coolant passage (3W) through which a coolant flows is formed inside the internal combustion engine (3);
the water pump (20) includes an inlet (20i) and an outlet (20o) connected to the coolant passage (3W);
the exhaust pipe (10) includes an exhaust pipe portion (19) that is located between a front end (20F) and a rear end (20Re) of the water pump (20) with regard to the front-rear direction of the vehicle and said exhaust pipe portion (19) has an upper edge (19u), **characterized in that**
the water pump (20) is attached to the side wall (31a) of the crankcase (31) and includes the inlet (20i) and the outlet (20o) connected directly to the coolant passage (3W);
the upper edge (19u) of said exhaust pipe portion (19) is located upward relative to a lower end (20D) of the water pump (20) with regard to an up-down direction of the vehicle and as the vehicle is seen from the side; and
the thermostat (50) is arranged inward relative to the exhaust pipe portion (19) in a vehicle width direction.

2. The straddled vehicle (1) according to claim 1, **characterized in that** a lower edge (19d) of the exhaust pipe portion (19) is located upward relative to an upper end (20U) of the water pump (20) with regard to the up-down direction of the vehicle.

3. The straddled vehicle (1) according to claim 1 or 2, **characterized in that:**
an inner end (19B) of the exhaust pipe portion (19) in the vehicle width direction is located inward in the vehicle width direction relative to an outer end (20A) of the water pump (20) in the vehicle width direction; and
an outer end (19A) of the exhaust pipe portion (19) in the vehicle width direction is located outward in the vehicle width direction relative to an inner end (20B) of the water pump (20) in the vehicle width direction.

4. The straddled vehicle (1) according to any one of claims 1 to 3, **characterized in that** at least a portion of the exhaust pipe portion (19) overlaps with the cylinder body (32) as the vehicle is seen from the side.

5. The straddled vehicle (1) according to any one of claims 1 to 4, **characterized in that** the thermostat (50) is attached to the crankcase (31).

6. The straddled vehicle (1) according to claim 5, **characterized in that:**
the crankcase (31) has a support surface (60s) facing upward with regard to the up-down direction of the vehicle; and
the thermostat (50) is supported on the support surface (60s).

7. The straddled vehicle (1) according to claim 6, **characterized in that:**
the support surface (60s) includes a first support surface (61s) that is formed with a first hole (61h) and a second support surface (62s) that is formed with a second hole (62h) and formed forward of the first support surface (61s) with regard to the front-rear direction of the vehicle;
a portion of the thermostat (50) is inserted in the first hole (61h); and
a bolt (63) for securing the thermostat (50) to the crankcase (31) is inserted through the second hole (62h).

8. The straddled vehicle according to any one of claims 1 to 7, **characterized in that** the thermostat (50) is a bottom-bypass-type thermostat that includes a case (55) formed with a first inlet (51), a second inlet (52) and an outlet (53), and a valve (56) arranged in the case (55), wherein the valve (56) opens the second inlet (52) when temperature is less than a first temperature and closes the second inlet (52) when temperature is greater than or equal to the first temperature.

9. The straddled vehicle (1) according to claim 8, **characterized in that** the first inlet (51) is open upward with regard to the up-down direction of the vehicle, the second inlet (52) is open sideward with regard to the vehicle width direction, and the outlet (53) is open downward with regard to the up-down direction of the vehicle.

10. The straddled vehicle (1) according to claim 9, **characterized in that** the valve (56) of the thermostat (50) is configured to be movable leftward and rightward with regard to the vehicle width direction.

11. The straddled vehicle according to any one of claims 8 to 10, **characterized in that:**
the coolant passage (3W) of the internal combustion engine (3) includes a first coolant passage (110) having a first inlet port (110i) and a first outlet port (110o), and a second coolant passage (120) having a second inlet port (120i) and a second outlet port (120o);
the inlet (20i) of the water pump (20) is connected to the second outlet port (120o) of the second coolant passage (120), and the outlet (20o) of the water pump (20) is connected to the first inlet port (110i) of the first coolant passage (110);
the radiator (40) has an inlet (40i) and an outlet (40o);
the straddled vehicle comprises:
a first passageway (71) connected to the first outlet port (110o) of the first coolant passage (110) and the inlet (40i) of the radiator (40);
a second passageway (72) connected to the outlet (40o) of the radiator (40) and the first inlet (51) of the thermostat (50); and
a bypass passageway (73) connected to the first outlet port (110o) of the first coolant passage (110) and the second inlet (52) of the thermostat (50); and
the outlet (53) of the thermostat (50) is connected to the second inlet port (120i) of the second coolant passage (120).

12. The straddled vehicle (1) according to claim 11, **characterized in that:**
the water pump (20), the exhaust pipe portion (19), the thermostat (50) and the second passageway (72) are arranged rightward relative to a vehicle center line (CL) as seen in a forward direction of the vehicle, and at least a portion of the first passageway (71) and at least a portion of the bypass passageway (73) are arranged leftward relative to the vehicle center line (CL) as seen in the forward direction of the vehicle; or
the water pump (20), the exhaust pipe portion (19), the thermostat (50) and the second passageway (72) are arranged leftward relative to the vehicle center line (CL) as seen in the forward direction of the vehicle, and at least a portion of the first passageway (71) and at least a portion of the bypass passageway (73) are arranged rightward relative to the vehicle center line (CL) as seen in the forward direction of the vehicle.

13. The straddled vehicle (1) according to claim 12, **characterized in that:**
the internal combustion engine (3) includes a cylinder head cover (34) connected to the cylinder head (33);
the exhaust pipe portion (19) includes a portion that overlaps with the cylinder body (32) as the vehicle is seen from the side;
the first passageway (71) includes a portion that overlaps with the cylinder head cover (34) as the vehicle is seen from the side; and
the bypass passageway (73) includes a portion that overlaps with the cylinder body (32) as the vehicle is seen from the side.

## Patentansprüche

1. Ein Spreiz-Sitz-Fahrzeug (1), das umfasst:
einen wassergekühlten Verbrennungsmotor (3), ein Kurbelgehäuse (31), das eine Seitenwand (31a) hat, einen Zylinderkörper (32), der mit dem Kurbelgehäuse (31) verbunden ist, und einen Zylinderkopf (33), der mit dem Zylinderkörper (32) verbunden ist;
eine Wasserpumpe (20);
einen Kühler (40), der vorwärts relativ zum Zylinderkörper (32) in Bezug auf eine Vorwärts-Rückwärts-Richtung des Fahrzeugs angeordnet ist;
einen Thermostat (50), der vor dem Zylinderkörper (32) und rückwärts relativ zum Kühler (40) in Bezug auf die Vorwärts-Rückwärts-Richtung des Fahrzeugs angeordnet ist; und ein Abgasrohr (10), das mit dem Zylinderkopf (33) verbunden ist und durch das ein Abgas strömt, wobei:
ein Kühlmitteldurchgang (3W), durch den ein Kühlmittel fließt, im Inneren des Verbrennungsmotors (3) ausgebildet ist;
die Wasserpumpe (20) beinhaltet einen Einlass (20i) und einen Auslass (20o), die mit dem Kühlmitteldurchgang (3W) verbunden sind;
das Abgasrohr (10) beinhaltet einen Abgasrohrabschnitt (19), der zwischen einem vorderen Ende (20F) und einem hinteren Ende (20Re) der Wasserpumpe (20) in Bezug auf die Vorwärts-Rückwärts-Richtung des Fahrzeugs angeordnet ist, und dieser Abgasrohrabschnitt (19) hat eine obere Kante (19u), **dadurch gekennzeichnet, dass** die Wasserpumpe (20) an der Seitenwand (31a) des Kurbelgehäuses (31) angebracht ist und den Einlass (20i) und den Auslass (20o) direkt verbunden mit dem Kühlmitteldurchgang (3W) beinhaltet;
die obere Kante (19u) des Abgasrohrabschnitts (19) oberhalb relativ zu einem unteren Ende (20D) der Wasserpumpe (20) in Bezug auf eine Aufwärts-Abwärts-Richtung des Fahrzeugs und bei Betrachtung des Fahrzeugs von der Seite angeordnet ist; und
der Thermostat (50) innerhalb relativ zum Abgasrohrabschnitt (19) in einer Fahrzeugbreitenrichtung angeordnet ist.

2. Das Spreiz-Sitz-Fahrzeug (1) gemäß Anspruch 1, **dadurch gekennzeichnet, dass** eine Untere Kante (19d) des Abgasrohrabschnitts (19) oberhalb relativ zu einem oberen Ende (20U) der Wasserpumpe (20) in Bezug auf die Aufwärts-Abwärts-Richtung des Fahrzeugs angeordnet ist.

3. Das Spreiz-Sitz-Fahrzeug (1) gemäß Anspruch 1 oder 2, **dadurch gekennzeichnet, dass:**
ein inneres Ende (19B) des Abgasrohrabschnitts (19) in der Fahrzeugbreitenrichtung innerhalb relativ zu einem äußeren Ende (20A) der Wasserpumpe (20) in der Fahrzeugbreitenrichtung angeordnet ist; und
ein äußeres Ende (19A) des Abgasrohrabschnitts (19) in der Fahrzeugbreitenrichtung in außen in der Fahrzeugbreitenrichtung relativ zu einem inneren Ende (20B) der Wasserpumpe (20) in der Fahrzeugbreitenrichtung angeordnet ist.

4. Das Spreiz-Sitz-Fahrzeug (1) gemäß irgendeinem der Ansprüche 1 bis 3, **dadurch gekennzeichnet, dass** zumindest ein Abschnitt des Abgasrohrabschnitts (19) den Zylinderkörper (32) überlappt, wenn das Fahrzeug von der Seite betrachtet ist.

5. Das Spreiz-Sitz-Fahrzeug (1) gemäß irgendeinem der Ansprüche 1 bis 4, **dadurch gekennzeichnet, dass** der Thermostat (50) am Kurbelgehäuse (31) angebracht ist.

6. Das Spreiz-Sitz-Fahrzeug (1) gemäß Anspruch 5, **dadurch gekennzeichnet, dass:**
das Kurbelgehäuse (31) eine Auflagefläche (60s) hat, die in Bezug auf Aufwärts-Abwärts-Richtung des Fahrzeugs nach oben gewandt; und
der Thermostat (50) auf der Auflagefläche (60s) gelagert ist.

7. Das Spreiz-Sitz-Fahrzeug (1) gemäß Anspruch 6, **dadurch gekennzeichnet, dass:**
die Stützfläche (60s) eine erste Stützfläche (61s), die mit einem ersten Loch (61h) ausgebildet ist, und eine zweite Stützfläche (62s), die mit einem zweiten Loch (62h) ausgebildet ist und in Bezug auf die Vorwärts-Rückwärts-Richtung des Fahrzeugs vor der ersten Stützfläche (61s) ausgebildet ist, beinhaltet;
ein Abschnitt des Thermostats (50) in das erste Loch (61h) eingesetzt ist; und
eine Schraube (63) zur Sicherung des Thermostats (50) am Kurbelgehäuse (31) durch das zweite Loch (62h) eigesetzt ist.

8. Das Spreiz-Sitz-Fahrzeug gemäß irgendeinem der Ansprüche 1 bis 7, **dadurch gekennzeichnet, dass** der Thermostat (50) ein Boden-Bypass-Typ-Thermostat ist, der ein Gehäuse (55), das mit einem ersten Einlass (51), einem zweiten Einlass (52) und einem Auslass (53) ausgebildet ist, und ein Ventil (56), das in dem Gehäuse (55) angeordnet ist, beinhaltet, wobei das Ventil (56) den zweiten Einlass (52) öffnet, wenn die Temperatur niedriger als eine erste Temperatur ist, und den zweiten Einlass (52) schließt, wenn die Temperatur größer als oder gleich der ersten Temperatur ist.

9. Das Spreiz-Sitz-Fahrzeug (1) gemäß Anspruch 8, **dadurch gekennzeichnet, dass** der erste Einlass (51) in Bezug auf die Aufwärts-Abwärts-Richtung des Fahrzeugs nach oben offen ist, der zweite Einlass (52) in Bezug auf die Fahrzeugbreitenrichtung seitlich offen ist und der Auslass (53) in Bezug auf die Aufwärts-Abwärts-Richtung des Fahrzeugs nach unten offen ist.

10. Das Spreiz-Sitz-Fahrzeug (1) gemäß Anspruch 9, **dadurch gekennzeichnet, dass** das Ventil (56) des Thermostats (50) konfiguriert ist, um nach links und nach rechts mit Bezug auf die Fahrzeugbreitenrichtung bewegbar ist.

11. Das Spreiz-Sitz-Fahrzeug gemäß irgendeinem der Ansprüche 8 bis 10, **dadurch gekennzeichnet, dass:**
der Kühlmitteldurchgang (3W) des Verbrennungsmotors (3) einen ersten Kühlmitteldurchgang (110), der einen ersten Einlassanschluss (110i) und einen ersten Auslassanschluss (110o) hat, und einen zweiten Kühlmitteldurchgang (120), der einen zweiten Einlassanschluss (120i) und einen zweiten Auslassanschluss (120o) hat, beinhaltet;
der Einlass (20i) der Wasserpumpe (20) mit dem zweiten Auslassanschluss (120o) des zweiten Kühlmitteldurchgangs (120) verbunden ist, und der Auslass (20o) der Wasserpumpe (20) mit dem ersten Einlassanschluss (110i) des ersten Kühlmitteldurchgangs (110) verbunden ist;
der Kühler (40) hat einen Einlass (40i) und einen Auslass (40o);
das Spreiz-Sitz-Fahrzeug umfasst:
einen ersten Durchgang (71), der mit dem ersten Auslassanschluss (110o) des ersten Kühlmitteldurchgangs (110) und dem Einlass (40i) des Kühlers (40) verbunden ist;
einen zweiten Durchgang (72), der mit dem Auslass (40o) des Heizkörpers (40) und dem ersten Einlass (51) des Thermostats (50) verbunden ist; und
einen Bypass- Durchgang (73), der mit dem ersten Auslassanschluss (110o) des ersten Kühlmitteldurchgangs (110) und dem zweiten Einlass (52) des Thermostats (50) verbunden ist; und
der Auslass (53) des Thermostats (50) mit dem zweiten Einlassanschluss (120i) des zweiten Kühlmitteldurchgangs (120) verbunden ist.

12. Das Spreiz-Sitz-Fahrzeug (1) gemäß Anspruch 11, **dadurch gekennzeichnet, dass:**
die Wasserpumpe (20), der Abgasrohrabschnitt (19), der Thermostat (50) und der zweite Durchgang (72) relativ zu einer Fahrzeugmittellinie (CL) in Vorwärtsrichtung des Fahrzeugs gesehen rechts angeordnet sind, und zumindest ein Abschnitt des ersten Durchgangs (71) und zumindest ein Abschnitt des Bypass-Durchgangs (73) relativ zu der Fahrzeugmittellinie (CL) in Vorwärtsrichtung des Fahrzeugs gesehen links angeordnet sind; oder
die Wasserpumpe (20), der Abgasrohrabschnitt (19), der Thermostat (50) und der zweite Durchgang (72) in Bezug auf die Fahrzeugmittellinie (CL) in Vorwärtsrichtung des Fahrzeugs gesehen links angeordnet sind, und zumindest ein Abschnitt des ersten Durchgangs (71) und zumindest ein Abschnitt des Bypass-Durchgangs (73) in Bezug auf die Fahrzeugmittellinie (CL) in Vorwärtsrichtung des Fahrzeugs gesehen rechts angeordnet sind.

13. Der Spreiz-Sitz-Fahrzeug (1) gemäß Anspruch 12, **dadurch gekennzeichnet, dass:**
der Verbrennungsmotor (3) einen Zylinderkopfdeckel (34) beinhaltet, die mit dem Zylinderkopf (33) verbunden ist;
der Abgasrohrabschnitt (19) einen Abschnitt beinhaltet, der sich mit dem Zylinderkörper (32) überlappt, wenn das Fahrzeug von der Seite betrachtet ist;
der erste Durchgang (71) einen Abschnitt beinhaltet, der sich mit dem Zylinderkopfdeckel (34) überlappt, wenn das Fahrzeug von der Seite betrachtet ist; und
der Bypass-Kanal (73) einen Abschnitt beinhaltet, der sich mit dem Zylinderkörper (32) überlappt, wenn das Fahrzeug von der Seite betrachtet ist.

## Revendications

1. Véhicule à enfourcher (1) comprenant :
un moteur à combustion interne refroidi par eau (3) comprenant un carter (31) ayant une paroi latérale (31a), un corps de cylindre (32) connecté au carter (31), et une culasse (33) connectée au corps de cylindre (32) ;
une pompe à eau (20) ;
un radiateur (40) agencé à l'avant par rapport au corps de cylindre (32) en direction avant-arrière du véhicule ;
un thermostat (50) agencé à l'avant du corps de cylindre (32) et à l'arrière par rapport au radiateur (40) en direction avant-arrière du véhicule ; et
un tuyau d'échappement (10) qui est connecté à la culasse (33) et à travers lequel passe un gaz d'échappement, dans lequel :
un passage de liquide de refroidissement (3W) à travers lequel s'écoule un liquide de refroidissement est formé à l'intérieur du moteur à combustion interne (3) ;
la pompe à eau (20) comprend une entrée (20i) et une sortie (20o) connectées au passage de liquide de refroidissement (3W) ;
le tuyau d'échappement (10) comprend une portion de tuyau d'échappement (19) qui se trouve entre une extrémité avant (20F) et une extrémité arrière (20Re) de la pompe à eau (20) en direction avant-arrière du véhicule et ladite portion de tuyau d'échappement (19) comporte un bord supérieur (19u),
**caractérisé en ce que**
la pompe à eau (20) est attachée à la paroi latérale (31a) du carter (31) et comprend l'entrée (20i) et la sortie (20o) connectées directement au passage de liquide de refroidissement (3W) ;
le bord supérieur (19u) de ladite portion de tuyau d'échappement (19) se trouve au-dessus d'une extrémité inférieure (20D) de la pompe à eau (20) en direction haut-bas du véhicule et lorsque le véhicule est vu de côté ; et
le thermostat (50) est agencé à l'intérieur par rapport à la portion de tuyau d'échappement (19) en direction de la largeur du véhicule.

2. Véhicule à enfourcher (1) selon la revendication 1, **caractérisé en ce qu'**un bord inférieur (19d) de la portion de tuyau d'échappement (19) se trouve au-dessus d'une extrémité supérieure (20U) de la pompe à eau (20) en direction haut-bas du véhicule.

3. Véhicule à enfourcher (1) selon la revendication 1 ou 2, **caractérisé en ce que** :
une extrémité interne (19B) de la portion de tuyau d'échappement (19) en direction de la largeur du véhicule se trouve à l'intérieur en direction de la largeur du véhicule par rapport à une extrémité externe (20A) de la pompe à eau (20) en direction de la largeur du véhicule ; et
une extrémité externe (19A) de la portion de tuyau d'échappement (19) en direction de la largeur du véhicule se trouve à l'extérieur en direction de la largeur du véhicule par rapport à une extrémité interne (20B) de la pompe à eau (20) en direction de la largeur du véhicule.

4. Véhicule à enfourcher (1) selon l'une quelconque des revendications 1 à 3, **caractérisé en ce qu'**au moins une portion de la portion de tuyau d'échappement (19) chevauche le corps de cylindre (32) lorsque le véhicule est vu de côté.

5. Véhicule à enfourcher (1) selon l'une quelconque des revendications 1 à 4, **caractérisé en ce que** le thermostat (50) est attaché au carter (31).

6. Véhicule à enfourcher (1) selon la revendication 5, **caractérisé en ce que** :
le carter (31) comporte une surface de support (60s) tournée vers le haut en direction haut-bas du véhicule ; et
le thermostat (50) est supporté sur la surface de support (60s).

7. Véhicule à enfourcher (1) selon la revendication 6, **caractérisé en ce que** :
la surface de support (60s) comprend une première surface de support (61s) qui est formée avec un premier trou (61h), et une deuxième surface de support (62s) qui est formée avec un deuxième trou (62h) et formée à l'avant de la première surface de support (61s) en direction avant-arrière du véhicule ;
une portion du thermostat (50) est insérée dans le premier trou (61h) ; et
un boulon (63) pour fixer le thermostat (50) au carter (31) est inséré à travers le deuxième trou (62h).

8. Véhicule à enfourcher selon l'une quelconque des revendications 1 à 7, **caractérisé en ce que** le thermostat (50) est un thermostat du type à contournement inférieur qui comprend un boîtier (55) formé avec une première entrée (51), une deuxième entrée (52) et une sortie (53), et une soupape (56) agencée dans le boîtier (55), dans lequel la soupape (56) ouvre la deuxième entrée (52) quand la température est inférieure à une première température et ferme la deuxième entrée (52) quand la température est supérieure ou égale à la première température.

9. Véhicule à enfourcher (1) selon la revendication 8, **caractérisé en ce que** la première entrée (51) est ouverte vers le haut en direction haut-bas du véhicule, la deuxième entrée (52) est ouverte latéralement en direction de la largeur du véhicule, et la sortie (53) est ouverte vers le bas en direction haut-bas du véhicule.

10. Véhicule à enfourcher (1) selon la revendication 9, **caractérisé en ce que** la soupape (56) du thermostat (50) est configurée pour être mobile vers la gauche et vers la droite en direction de la largeur du véhicule.

11. Véhicule à enfourcher selon l'une quelconque des revendications 8 à 10, **caractérisé en ce que** :
le passage de liquide de refroidissement (3W) du moteur à combustion interne (3) comprend un premier passage de liquide de refroidissement (110) comportant un premier orifice d'entrée (110i) et un premier orifice de sortie (110o), et un deuxième passage de liquide de refroidissement (120) comportant un deuxième orifice d'entrée (120i) et un deuxième orifice de sortie (120o) ;
l'entrée (20i) de la pompe à eau (20) est connectée au deuxième orifice de sortie (120o) du deuxième passage de liquide de refroidissement (120), et la sortie (20o) de la pompe à eau (20) est connectée au premier orifice d'entrée (110i) du premier passage de liquide de refroidissement (110) ;
le radiateur (40) comporte une entrée (40i) et une sortie (40o) ;
le véhicule à enfourcher comprend :
un premier passage (71) connecté au premier orifice de sortie (110o) du premier passage de liquide de refroidissement (110) et à l'entrée (40i) du radiateur (40) ;
un deuxième passage (72) connecté à la sortie (40o) du radiateur (40) et à la première entrée (51) du thermostat (50) ; et
un passage de contournement (73) connecté au premier orifice de sortie (110o) du premier passage de liquide de refroidissement (110) et à la deuxième entrée (52) du thermostat (50) ; et
la sortie (53) du thermostat (50) est connectée au deuxième orifice d'entrée (120i) du deuxième passage de liquide de refroidissement (120).

12. Véhicule à enfourcher (1) selon la revendication 11, **caractérisé en ce que** :
la pompe à eau (20), la portion de tuyau d'échappement (19), le thermostat (50) et le deuxième passage (72) sont agencés vers la droite par rapport à une ligne centrale du véhicule (CL) vu en direction d'avancement du véhicule, et au moins une portion du premier passage (71) et au moins une portion du passage de contournement (73) sont agencées vers la gauche par rapport à la ligne centrale du véhicule (CL) vu en direction d'avancement du véhicule ; ou
la pompe à eau (20), la portion de tuyau d'échappement (19), le thermostat (50) et le deuxième passage (72) sont agencés vers la gauche par rapport à la ligne centrale du véhicule (CL) vu en direction d'avancement du véhicule, et au moins une portion du premier passage (71) et au moins une portion du passage de contournement (73) sont agencées vers la droite par rapport à la ligne centrale du véhicule (CL) vu en direction d'avancement du véhicule.

13. Véhicule à enfourcher (1) selon la revendication 12, **caractérisé en ce que** :
le moteur à combustion interne (3) comprend un couvre-culasse (34) connecté à la culasse (33) ;
la portion de tuyau d'échappement (19) comprend une portion qui chevauche le corps de cylindre (32) lorsque le véhicule est vu de côté ;
le premier passage (71) comprend une portion qui chevauche le couvre-culasse (34) lorsque le véhicule est vu de côté ; et
le passage de contournement (73) comprend une portion qui chevauche le corps de cylindre (32) lorsque le véhicule est vu de côté.
